# EUROPEAN PATENT SPECIFICATION

(11) **EP 3 175 984 B1**
(45) Date of publication and mention of the grant of the patent: **03.07.2019**
(21) Application number: 16020174.5
(22) Date of filing: 09.05.2016
(51) Int. Cl.: B32B 27/08, B32B 27/12, B32B 27/22, B32B 27/30

(54) **RIGID SURFACE COVERING PLASTIC MATERIAL**
STARRES OBERFLÄCHENABDECKUNGSKUNSTSTOFFMATERIAL
SURFACE RIGIDE DE REVÊTEMENT DE MATIÈRE PLASTIQUE

(30) Priority: 01.12.2015 CN 201510872395
(43) Date of publication of application: 07.06.2017
(73) Proprietor: Shanghai Jinka Flooring Technology Co., Ltd., East Industrial District, Waigang, Jiading Shanghai 201806 (CN)
(72) Inventor: Wanpeng, Li, Shanghai 201806 (CN); Nan, Ye, Shanghai 201806 (CN)
(74) Representative: Rzazewska, Dorota

(56) References cited:
- EP-A1- 1 411 083
- WO-A1-2015/106095
- US-A- 3 165 560
- US-A- 3 401 129
- US-A- 4 234 703

## Description

### CROSS REFERENCE TO RELATED APPLICATION

The present application is based on and claims priority of Chinese Patent Application No. 201510872395.9, filed on December 1, 2015.

### FIELD OF THE INVENTION

The present invention relates to a decorative building material, and more particularly to a rigid surface covering plastic material.

### BACKGROUND OF THE INVENTION

Indoor decorative flooring tiles generally include hardwood flooring, stone flooring, rubber flooring, linoleum flooring, and composite flooring which generally includes composite wood, wood-plastic composites, and PVC tiles. Owing to utilize fiber as substrate material, the hardwood flooring, the composite wood and the linoleum flooring have the defects of poor water proofing property and easy deformation. The stone flooring has the defects of poor thermal insulation property and slippery, especially in rainy season, individuals are easy to slip and get injured because of the slippery surface of the stone flooring. The rubber flooring has excellent overall performance except high price and strict installation requirement, which limits its usage and expansion. In addition, the stone flooring and the rubber flooring are quite heavy for transportation and installation, especially for high buildings, it will cause harmful damages to the main frames. Wood-plastic flooring is a kind of green flooring with excellent properties, however, its internal stress can not be eliminated completely and the flooring is liable to deform and crack as time goes by or temperature and humidity changes. Furthermore, due to the wood-plastic flooring is easy deformation under pressure, it is easy to produce unrecoverable indentation during transportation.

PVC tiles occupy the largest market share in the composite flooring market due to its excellent waterproof, fire retardant and wear resistance properties, and have advantages of color diversity, beautiful and durable, simple installation and low replacement cost. However, the flooring usually applies locking structure under a consideration of environment protection and easy installation. The locking force of the locking structure depends primarily on connections between projections and recesses of the locking structure, and is generally determined by the structure, the machining precision, and the substrate material of the locking structure. Due to the substrate material of the current available PVC tiles is relative soft, the locking structure of the current available PVC tiles can easily be opened, making the flooring be easily warped or fallen off after a period of installation. In order to increase connection strengths of the PVC tiles, commonly used methods include: lengthening the locking structure, utilizing complex locking structures and improving machining precision of the locking structures. Although the forgoing methods could increase the connection strengths of the PVC tiles, they generally have two defects: the first is time-consuming and laborious installation, and the second is the increase of the PVC tiles cost.

In addition, there is a kind of PVC foam flooring in the market. This kind of flooring has moderate hardness and suitable for processing locking structures, however, this kind of flooring are usually manufactured by extrusion molding, which leads the flooring be low productivity and have poor dimensional stability, and be not suitable for mass production.

In order to overcome the forgoing defects, it is necessary to develop a kind of PVC tiles with good machining property, relative high hardness, strong toughness, and acceptable cost.

European Publication Number EP1411083A1 discloses a vinyl chloride polymer composition can be used as interior decorative articles such as cushiony floors. The vinyl chloride polymer composition includes 100 parts of PVC resin, 17-50 parts of PU/SEEPS, 33-50 parts of paraffin PL and 33-50 parts of SEEPS-2. However, the vinyl chloride polymer composition does not include liquid plasticizer.

### SUMMARY OF THE INVENTION

The object of the present invention is to provide a rigid surface covering plastic material.

The present invention provides a rigid surface covering plastic material including a base layer which includes 100 parts by weight of PVC resin, 10∼60 parts by weight of solid plasticizer, 0.1∼10 parts by weight of liquid plasticizer and 60∼510 parts by weight of additive. The solid plasticizer is at least one of a green polymer with a melting point of 50∼150°C and EPDM. The green polymer with a melting point of 50∼150°C is at least one of modified TPU, modified PU, modified PP and modified vinyl polymer. The base layer includes a middle layer and a bottom layer, the middle layer includes 100 parts by weight of PVC resin, 10∼60 parts by weight of solid plasticizer and 125∼400 parts by weight of additive, the bottom layer includes 100 parts by weight of PVC resin, 10∼60 parts by weight of solid plasticizer and 60∼350 parts by weight of additive.

In an embodiment of the present invention, the base layer includes 30∼60 parts by weight of the solid plasticizer.

In an embodiment of the present invention, the base layer includes 150∼350 parts by weight of the additives.

In an embodiment of the present invention, the base layer includes 225∼300 parts by weight of the additives.

In an embodiment of the present invention, the liquid plasticizer is selected from a group consisting of phthalate acid esters plasticizers, fatty acid ester plasticizers, aliphatic dibasic acid ester plasticizers, phosphate ester plasticizers, epoxy compound plasticizers, chlorine-containing plasticizers and trimellitate plasticizers.

In an embodiment of the present invention, the liquid plasticizer is DOTP.

In an embodiment of the present invention, the rigid surface covering plastic material further includes at least a glass fiber layer, which is disposed between the middle layer and the bottom layer.

In an embodiment of the present invention, the middle layer has multilayer structure; the rigid surface covering plastic material further includes at least a glass fiber layer, which is disposed between adjacent layers of the middle layer.

In an embodiment of the present invention, the rigid surface covering plastic material further includes a decoration layer disposed on the base layer and a surface protection layer disposed on the decoration layer, the surface protection layer is a hard PVC transparent film or a hard transparent polyester film, and a hardness of the surface protection layer is 50∼85 HD, a thickness of the surface protection layer is 0.05∼1.5mm.

In an embodiment of the present invention, the rigid surface covering plastic material further includes a UV coating layer formed on the surface protection layer.

In an embodiment of the present invention, the rigid surface covering plastic material further includes a plurality of locking structures formed on the surface covering plastic material.

In the present invention, each one of the locking structures includes recesses formed at one side of the surface covering plastic material, and projections formed at the other side of the surface covering plastic material opposite to the recesses, the recesses and the projections are clasped together to snap two adjacent ones of the surface covering plastic materials together.

In the present invention, the additives is a mixture of calcium carbonate powder and other additives, the other additives is selected from a group consisting of stabilizers, flame retardants, smoke suppressants, and antioxidants.

### BRIEF DESCRIPTION OF THE DRAWINGS

The above objects and advantages of the present invention will become more readily apparent to those ordinarily skilled in the art after reviewing the following detailed description and accompanying drawings, in which:
FIG. 1 is a schematic view of a rigid surface covering plastic material according to a first embodiment of the present invention.
FIG. 2 is a schematic view of a rigid surface covering plastic material according to a third embodiment of the present invention.
FIG. 3 is a schematic view of a locking structure of a rigid surface covering plastic material according to a fourth embodiment of the present invention.
FIG. 4 is a schematic view of a work table used for measuring a stiffness of the rigid surface covering plastic material of the present invention.
FIG. 5 is a schematic view showing the location of a test piece on the work table.
FIG. 6 is a schematic view showing one end of the test piece being pressed by a pressing block.
FIG. 7 is a schematic view showing a droop state of the test piece.

### DETAILED DESCRIPTION OF PREFERRED EMBODIMENTS

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

### EMBODIMENT 1

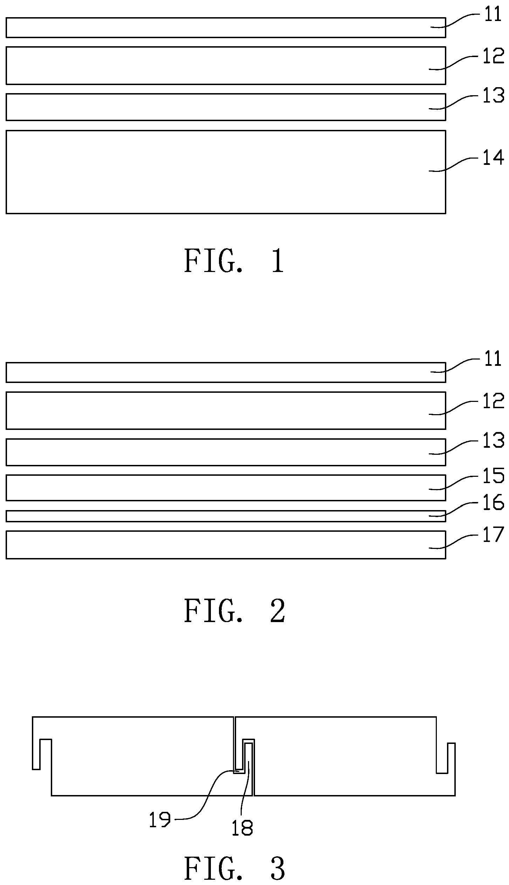

The rigid surface covering plastic material of the present invention is preferably PVC tiles, which can be used to cover ceiling, wall, and wardrobe as well as ground. Referring to FIG. 1, the rigid surface covering plastic material includes a UV coating layer 11, a surface protection layer 12, a decoration layer 13 and a base layer 14 sequentially from top to bottom.

The UV coating layer 11 is formed on the surface protection layer 12 and the UV coating layer 11 could be omitted in other embodiments of the present invention.

The surface protection layer 12 can be made of hard PVC transparent film, hard transparent polyester film or other suitable materials, and having a thickness of 0.05∼1.5mm. A hardness of the hard PVC transparent film or the hard transparent polyester film is 50∼85 HD (shore hardness unit). If the surface protection layer 12 is made of hard PVC transparent film or hard transparent polyester film, its hardness influences the total stiffness of the rigid surface covering plastic material. If the surface protection layer 12 is made of non-hard material, the hardness of the surface protection layer 12 is negligible. In the present embodiment, the surface protection layer 12 is made of hard PVC transparent film or hard transparent polyester film.

The decoration layer 13 is a PVC film or a polyester film with printed patterns or textures formed on a surface thereof. In a preferred embodiment, both of the surface protection layer 12 and the decoration layer 13 are PVC layer. In the present invention, the thickness and the hardness of the UV coating layer 11 and the decoration layer 13 are negligible.

The base layer 14 of a single layer or multilayer formed by rolling a mixture including PVC resin, solid plasticizer, liquid plasticizer and additive. In the present embodiment, the base layer 14 is a single layer. A thickness of the base layer 14 is in the range of 1.95∼6.95mm.

The material of the base layer 14 includes 100wt% of PVC resin, 10∼60wt% of solid plasticizer (preferably 30∼60wt%), 0.1∼10wt% of liquid plasticizer, and 60∼510wt% of additive (preferably 150∼350 wt% and 225∼300 wt% is best). That is, when preparing the material of the base layer 14, 100 parts of PVC resin is mixed with 10∼60 parts of solid plasticizer, 0.1∼10 parts of liquid plasticizer and 60∼510 parts of additive.

In the material of the base layer 14, the liquid plasticizer is selected from a group consisting of phthalate acid esters plasticizers, fatty acid ester plasticizers, aliphatic dibasic acid ester plasticizers, phosphate ester plasticizers, epoxy compound plasticizers, chlorine-containing plasticizers and trimellitate plasticizers. In the present embodiment, the liquid plasticizer is DOTP (dioctyl terephthalate). The solid plasticizer is a modified green polymer with a melting point of 50∼150°C, such as modified TPU (Thermoplastic polyurethanes), modified PU (Poly urethane), modified PP (Polypropylene), and/or modified vinyl polymer. The modified vinyl polymer may be modified chlorinated polyethylene, or modified polymer blends such as Ethylene- butene-modified polymer blends. In the present embodiment, the solid plasticizer is preferably modified TPU with a melting point of 120∼130°C. Furthermore, in another preferred embodiment, the solid plasticizer can also be EPDM (Ethylene Propylene Diene Monomer) or a mixture of EPDM and the modified green polymer with a melting point of 50∼150 °C. In the present invention, the additive is a mixture of calcium carbonate powder and other additives. In the present invention, the other additives may be selected from a group consisting of stabilizers, flame retardants, smoke suppressants, antioxidants and other common additives.

In surface covering plastic material areas, the liquid plasticizers are commonly used, and the stiffness of the rigid surface covering plastic material is significantly improved by adding solid plasticizers (a modified green polymer with a melting point of 50∼150°C and/or EPDM) into the material mixture of the base layer and providing a reasonable formula design of the material mixture. Due to the melting points of the modified green polymer and EPDM are below a calender processing point 160∼170°C of PVC, the fluidity of molten PVC mixture is improved, and calender molding of the molten PVC mixture is further facilitated. In a preferred embodiment of the present invention, due to the modified TPU and EPDM has strength and toughness as rubber body, the strength and toughness of the rigid surface covering plastic material are significantly improved. Furthermore, due to the modified TPU and EPDM have low glass transition temperature (the minimum glass transition temperature of modified TPU reaches -50°C, and the minimum glass transition temperature of EPDM reaches -48°C), the glass transition temperature of the PVC mixture is effectively reduced, and the rigid surface covering plastic material obtains good low temperature performance, which makes the rigid surface covering plastic material, especially PVC tiles, overcomes low temperature embrittlement defect, so that the product surface of the PVC tiles will not crack or fracture because of temperature difference between the origin country and the export country when exported to high-latitudes countries in Europe. In addition, owing to the thermal expansion coefficient of TPU is less than PVC, the sheet formed by the PVC mixture obtains better dimensional stability. It is noted that Embodiment 1 and its related FIG. 1 do not belong to the invention.

### EMBODIMENT 2

In the present embodiment, the rigid surface covering plastic material includes the same UV coating layer 11, surface protection layer 12 and decoration layer 13 as the rigid surface covering plastic material of the first embodiment. The difference between the rigid surface covering plastic material of the present embodiment and the first embodiment is the base layer 14. In the present embodiment, the material of the base layer 14 does not include liquid plasticizer. In the present embodiment, the material of the base layer 14 includes: 100wt% of PVC resin, 10∼60 wt% of solid plasticizer (preferably 30∼60wt%), and 60∼510 wt% of additive (preferably 150∼350 wt% and 225∼300 wt% is best).

In the material of the base layer 14, the additive is a mixture of calcium carbonate powder and other additives. In the present invention, the other additives may be selected from a group consisting of stabilizers, flame retardants, smoke suppressants, antioxidants and other common additives. The solid plasticizer is a modified green polymer with a melting point of 50∼150°C, such as modified TPU (Thermoplastic polyurethanes), modified PU (Poly urethane), and/or modified PP (Polypropylene). In the present embodiment, the solid plasticizer is preferably modified TPU with a melting point of 120∼130°C. Furthermore, in another preferred embodiment, the solid plasticizer can also be EPDM (Ethylene Propylene Diene Monomer) or a mixture of EPDM and the modified green polymer with a melting point of 50∼150°C.

In the present embodiment, the stiffness of the rigid surface covering plastic material is significantly improved by changing the commonly used plasticizer, i.e. the liquid plasticizer, to the solid plasticizer, i.e., the modified green polymer with a melting point of 50∼150°C and/or EPDM, and providing a reasonable formula design of the material mixture. Furthermore, Due to the melting points of the modified green polymer and EPDM are below a calender molding point 160∼170°C of PVC, the fluidity of molten PVC mixture is improved, and calender molding of the molten PVC mixture is further facilitated. In a preferred embodiment of the present invention, due to the modified TPU and EPDM has strength and toughness as rubber body, the strength and toughness of the PVC sheet are significantly improved. Moreover, due to the modified TPU and EPDM have low glass transition temperature (the minimum glass transition temperature of modified TPU reaches -50°C, and the minimum glass transition temperature of EPDM reaches -48 °C), the glass transition temperature of the PVC mixture is effectively reduced, and the PVC tiles obtains good low temperature performance, and overcomes low temperature embrittlement defect, so that the product surface of the PVC tiles will not crack or fracture because of temperature difference between the origin country and the export country when exported to high-latitudes countries in Europe. In addition, owing to the thermal expansion coefficient of TPU is less than PVC, the sheet formed by the PVC mixture obtains better dimensional stability. It is noted that Embodiment 2 does not belong to the invention.

### EMBODIMENT 3

In the present embodiment, as shown in FIG. 2, the rigid surface covering plastic material includes the same UV coating layer 11, surface protection layer 12 and decoration layer 13 as the rigid surface covering plastic material of the first embodiment. The difference between the rigid surface covering plastic material of the present embodiment and the first embodiment is the base layer. In the present embodiment, the base layer includes two layers, i.e., a middle layer 15 and a bottom layer 17. The components of the middle layer 15 and the bottom layer 17 are the same as the material of the base layer of the first embodiment, the difference is the proportion of the components. In the present embodiment, the middle layer 15 includes 100wt% of PVC resin, 10∼60 wt% of solid plasticizer, 0.1∼10 wt% of liquid plasticizer and 125∼400 wt% of additive (preferably 150∼350 wt% and 225∼300 wt% is best). In the material of the middle layer 15, the additive is a mixture of calcium carbonate powder and other additives. The solid plasticizer is a modified green polymer with a melting point of 50∼150°C, such as modified TPU (Thermoplastic polyurethanes), modified PU (Poly urethane), and/or modified PP (Polypropylene). In the present embodiment, the solid plasticizer is preferably modified TPU with a melting point of 120∼130°C. Furthermore, in another preferred embodiment, the solid plasticizer can also be EPDM (Ethylene Propylene Diene Monomer) or a mixture of EPDM and the modified green polymer with a melting point of 50∼150°C. The middle layer 15 may be a single layer or include a multilayer structure. When the middle layer 15 has multilayer structure, at least a glass fiber layer may be arranged between adjacent layers of the middle layer, which increases the toughness, reduces deformation and increases stability of the rigid surface covering plastic material.

The bottom layer 17 includes 100wt% of PVC resin, 10∼60 wt% of solid plasticizer, 0.1∼10 wt% of liquid plasticizer and 60∼350 wt% of additive (preferably 120∼300 wt% and 150∼250 wt% is best). In the material of the bottom layer 17, the additive is a mixture of calcium carbonate powder and other additives. The solid plasticizer is a modified green polymer with a melting point of 50∼150°C, such as modified TPU (Thermoplastic polyurethanes), modified PU (Poly urethane), and/or modified PP (Polypropylene). In the present embodiment, the solid plasticizer is preferably modified TPU with a melting point of 120∼130°C. Furthermore, in another preferred embodiment, the solid plasticizer can also be EPDM (Ethylene Propylene Diene Monomer) or a mixture of EPDM and the modified green polymer with a melting point of 50∼150 °C.

In the present embodiment, at least a glass fiber layer 16 is arranged between the middle layer 15 and the bottom layer 17, for increasing the toughness, reducing deformation and increasing stability of the rigid surface covering plastic material. In the present invention, the influence of the glass fiber layer 16 on the thickness and the stiffness of the rigid surface covering plastic material are negligible. In other embodiments of the present invention, the glass fiber layer 16 can be omitted as appropriate.

### EMBODIMENT 4

The rigid surface covering plastic material of the present embodiment is the same as that of the third embodiment. Both of the rigid surface covering plastic material of the present embodiment and the third embodiment include the UV coating layer 11, the surface protection layer 12, the decoration layer 13, the middle layer 15, the glass fiber layer 16 and the bottom layer 17. In the present embodiment, a plurality of locking structures are formed on the rigid surface covering plastic material. As shown in FIG. 3, one side of the rigid surface covering plastic material has recesses 18, and an opposite side of the rigid surface covering plastic material has projections 19. The projections 19 and the recesses 18 are clasped together to form a locking structure, which snaps adjacent PVC tiles together. Since the stiffness of the present invention is relative high, the present rigid surface covering plastic material overcomes the difficult installation problems caused by deformation of the ordinary PVC sheet since the material of the ordinary PVC sheet is relative soft. Furthermore, the stiffness of the rigid surface covering plastic material being relative high makes the rigid surface covering plastic material have good processing performance and good anti-crack performance (projections and recesses of brittle material are easy to generate irreparable crack during transportation), which effectively increases the locking force of the PVC sheet, on one side makes the locking force of the present rigid surface covering plastic material be greater than the locking force of the ordinary PVC sheet when they have the same type of locking structure, on the other side makes areas of the recesses and the projections of the present rigid surface covering plastic material be smaller than the ordinary PVC sheet in order to achieve the same locking force when they have the same type of locking structure. That is, the present rigid surface covering plastic material could decrease the areas of the locking structure and decreases the cost of the floor tile.

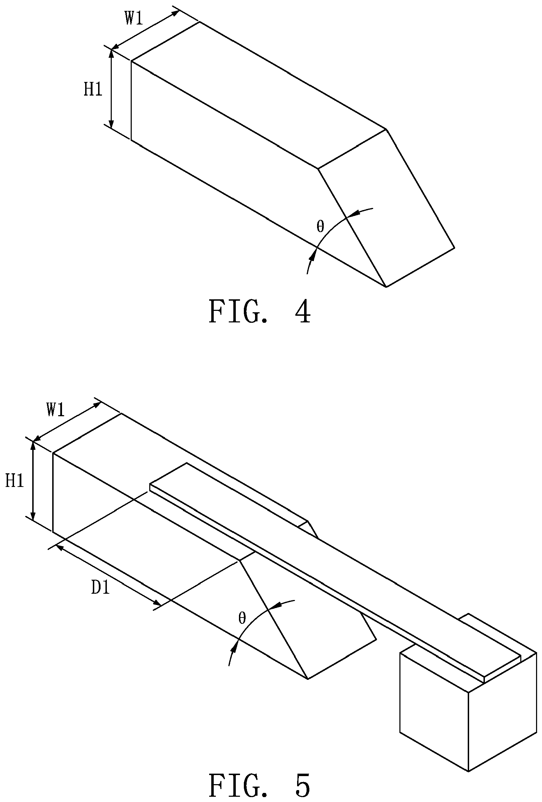

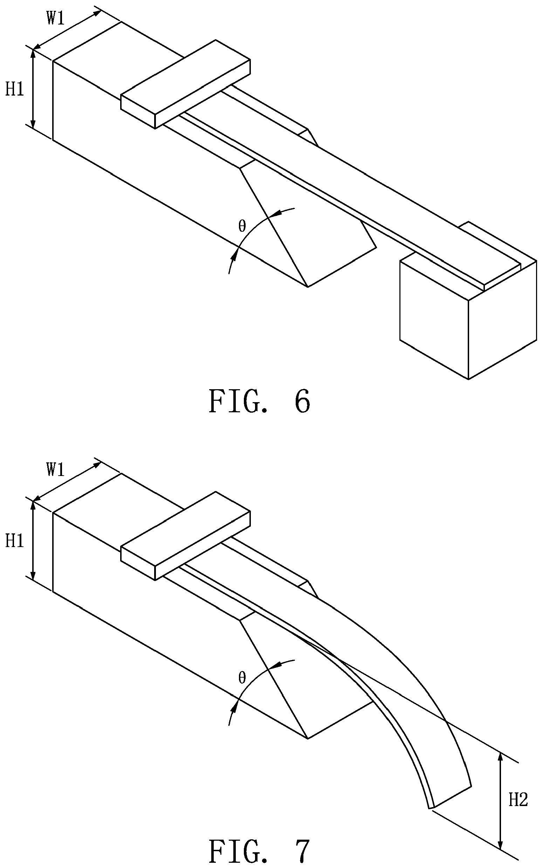

The above descriptions illustrate the specific embodiments of the rigid surface covering plastic material of the present invention, hereinafter; a method for measuring stiffness of the rigid surface covering plastic material of the present invention will be given. Because Shore A method and Shore D method, which are commonly used to measure hardness of a resilient sheet, can only measure surface hardness of a sheet, and surface hardness could be improved by coating hard painting, which results Shore hardness method could not reflect the real stiffness of the material, therefore, applicants provide a method for measuring the stiffness of the material of the sheet. According to the method, the rigid surface covering plastic material of the present invention droops a distance of less than 100mm within two hours at room temperature. The method is given as follows:
Step one: Preparing samples. Preparing three pieces of test samples, the dimension of the sample is 457.2 mm^{∗}50mm.
Step two: Preparing work table. As shown in FIG. 4, preparing a work table with a smooth top surface and a height H1 of 100mm. The word table is shaped to have a right-angled trapezoid front view, a rectangular top view and a square side view. An acute angle θ of the right-angled trapezoid is 45°, and a side length of the square is 100mm.
Step Three: placing the test piece on the work table with a free end of the test piece extending outside the work table, supporting the free end of the test piece by a support member and keeping the test piece at room temperature for a predetermined time to make performance of the whole test piece at a state be equivalent to the performance of the test piece under room temperature. Specifically shown in FIG. 5, the test piece is placed on the work table with a first end of the test piece lying on the work table and an opposite second end of the test piece extending outside the work table. A length D1 of the test piece on the work table (i.e., a length of the first end of the test piece) is 165mm and a length of the test piece extending outside the work table (i.e., a length of the second end of the test piece) is 292.2mm. The second end of the test piece is supported by a support member with a dimension of 100mm^{∗}100mm^{∗}100mm and the test piece is kept at a temperature of 23±1°C for more than 24 hours.
Step four: putting a pressing block on the work table and pressing on the first end of the test piece. Specifically shown in FIG. 6, the pressing block is placed on the work table at a position spacing a slant surface of the work table a distance D2 of 115mm and pressing on the first end of the test piece a length of 50mm.
Step Five: removing the support member and starting to test. As shown in FIG. 7, starting the time at the moment the support member being removed until the test piece touchdown. The stiffness of the test piece can be measured by the time the test piece spent to touchdown. The longer the time spent, the greater stiffness the test piece has. That is, the shorter the time spent, the smaller stiffness the test piece has, which represents the test piece be softer. Because the time the first end of the test piece spent to touchdown is more than two hours, a droop distance of the first end of the test piece could be used to measure the stiffness of the test piece. The data of the droop distance of the first end of the test piece within two hours is obtained by measuring the droop distances of the first ends of the test pieces within two hours and taking an average of three sets of data.

It should be noted that the method is for measuring rigid surface covering plastic material sheets with a thickness from 2.0∼7.0mm, an absolute deviation of the test results should be less than or equal to 10%, otherwise the sample is considered failure, and need to re-sample and test.

The following experiment data is taken to verify the stiffness a rigid surface covering plastic materials of the present invention. The samples were taken for collection of the test data are as follows:
Sample 1: a rigid surface covering plastic material includes a UV coating layer, a surface protection layer, a decoration layer, a middle layer, a glass fiber layer and a bottom layer, wherein the middle layer includes 100wt% of PVC resin, 10∼60 wt% of solid plasticizer, 0.1∼10 wt% of liquid plasticizer and 150∼350 wt% of additive, the bottom layer includes 100wt% of PVC resin, 10∼60 wt% of solid plasticizer, 0.1∼10 wt% of liquid plasticizer and 120∼300 wt% of additive.
Sample 2: a rigid surface covering plastic material includes a UV coating layer, a surface protection layer, a decoration layer, a middle layer, a glass fiber layer and a bottom layer, wherein the middle layer includes 100wt% of PVC resin, 10∼60 wt% of solid plasticizer, 0.1∼10 wt% of liquid plasticizer and 225∼300 wt% of additive, the bottom layer includes 100wt% of PVC resin, 10∼60 wt% of solid plasticizer, 0.1∼10 wt% of liquid plasticizer and 150∼250 wt% of additive.
Sample 3: Sample 3 is similar to Sample 1 except that locking structures are processed on opposite sides of the rigid surface covering plastic material.
Sample 4: Sample 4 is similar to Sample 2 except that locking structures are processed on opposite sides of the rigid surface covering plastic material.

The stiffness of Sample 1 to Sample 4, current PVC tiles and current PVC tiles with locking structures are given in the following table:

| Samples and its thickness (total thickness/thickness of surface protection layer) (mm) | | stiffness | | Density g/cm³ | Shore hardness( HD) |
|---|---|---|---|---|---|
| | | time | sagging distance | | |
| current PVC tiles | 2.0∼7.0/0.55 | 20s∼5min50s | 100mm | 1.0∼2.3 | 46∼65 |
| current PVC tiles with locking structures | 3.2∼7.0/0.55 | 20min45s∼ 1h48min38s | 100mm | 1.0∼2.3 | 50∼68 |
| Sample 1 | 2.0∼7.0/0.55 | 2h | 5∼28mm | 1.0∼2.3 | 50∼85 |
| Sample 2 | 2.0∼7.0/0.55 | 2h | 13∼80mm | 1.0∼2.3 | 54∼80 |
| Sample 3 | 3.2∼7.0/0.55 | 2h | 2∼12mm | 1.0∼2.3 | 60∼83 |
| Sample 4 | 3.2∼7.0/0.55 | 2h | 5∼36mm | 1.0∼2.3 | 56∼78 |

Test Descriptions: droop distance of 100mm indicates the test piece touches the ground within the predetermined time, droop distance of less than 100mm indicates the test piece does not touchdown within 2 hours.

As can be seen from the table, the present rigid surface covering plastic material basically does not droop within 2 hours at room temperature, which indicates the stiffness of the rigid surface covering plastic material of the present invention is significantly greater than that of the current available PVC tiles and the current available PVC tiles with locking structures.

In summary, the embodiments of the rigid surface covering plastic material of the present invention have the following advantages:
1. The stiffness of the rigid surface covering plastic material is significantly improved by adding solid plasticizers (a modified green polymer with a melting point of 50∼150°C and/or EPDM) into the material mixture of the base layer and providing a reasonable formula design of the material mixture. Due to the melting points of the modified green polymer and EPDM are below a calender processing point 160∼170°C of PVC, the fluidity of molten PVC mixture is improved, and calender molding of the molten PVC mixture is further facilitated. In a preferred embodiment of the present invention, due to the modified TPU and EPDM has strength and toughness as rubber body, the strength and toughness of the rigid surface covering plastic material are significantly improved. Furthermore, due to the modified TPU and EPDM have low glass transition temperature (the minimum glass transition temperature of modified TPU reaches -50°C, and the minimum glass transition temperature of EPDM reaches -48°C), the glass transition temperature of the PVC mixture is effectively reduced, and the rigid surface covering plastic material obtains good low temperature performance, which makes the rigid surface covering plastic material, especially PVC tiles, overcomes low temperature embrittlement defect, so that the product surface of the PVC tiles will not crack or fracture because of temperature difference between the origin country and the export country when exported to high-latitudes countries in Europe. In addition, owing to the thermal expansion coefficient of TPU is less than PVC, the sheet formed by the PVC mixture obtains better dimensional stability.
2. The glass fiber layer arranged in the base layer could increase the toughness, reduce deformation and increase stability of the rigid surface covering plastic material.
3. The stiffness of the rigid surface covering plastic material being relative high can effectively increase the locking force of the PVC sheet, on one side makes the locking force of the present rigid surface covering plastic material be greater than the locking force of the ordinary PVC sheet when they have the same type of locking structure, on the other side makes the areas of the recesses and the projections of the present rigid surface covering plastic material be smaller than the ordinary PVC sheet in order to achieve the same locking force when they have the same type of locking structure. That is to say, the present rigid surface covering plastic material could decrease the areas of the locking structure and decreases the cost of the floor tile.

While the invention has been described in terms of what is presently considered to be the most practical and preferred embodiments, it is to be understood that the invention needs not be limited to the disclosed embodiment. On the contrary, it is intended to cover various modifications and similar arrangements included within scope of the appended claims which are to be accorded with the broadest interpretation so as to encompass all such modifications and similar structures.
plastic material of the present invention is significantly greater than that of the current available PVC tiles and the current available PVC tiles with locking structures.

In summary, the embodiments of the rigid surface covering plastic material of the present invention have the following advantages:
1. The stiffness of the rigid surface covering plastic material is significantly improved by adding solid plasticizers (a modified green polymer with a melting point of 50∼150°C and/or EPDM) into the material mixture of the base layer and providing a reasonable formula design of the material mixture. Due to the melting points of the modified green polymer and EPDM are below a calender processing point 160∼170°C of PVC, the fluidity of molten PVC mixture is improved, and calender molding of the molten PVC mixture is further facilitated. In a preferred embodiment of the present invention, due to the modified TPU and EPDM has strength and toughness as rubber body, the strength and toughness of the rigid surface covering plastic material are significantly improved. Furthermore, due to the modified TPU and EPDM have low glass transition temperature (the minimum glass transition temperature of modified TPU reaches -50°C, and the minimum glass transition temperature of EPDM reaches -48°C), the glass transition temperature of the PVC mixture is effectively reduced, and the rigid surface covering plastic material obtains good low temperature performance, which makes the rigid surface covering plastic material, especially PVC tiles, overcomes low temperature embrittlement defect, so that the product surface of the PVC tiles will not crack or fracture because of temperature difference between the origin country and the export country when exported to high-latitudes countries in Europe. In addition, owing to the thermal expansion coefficient of TPU is less than PVC, the sheet formed by the PVC mixture obtains better dimensional stability.
2. The glass fiber layer arranged in the base layer could increase the toughness, reduce deformation and increase stability of the rigid surface covering plastic material.
3. The stiffness of the rigid surface covering plastic material being relative high can effectively increase the locking force of the PVC sheet, on one side makes the locking force of the present rigid surface covering plastic material be greater than the locking force of the ordinary PVC sheet when they have the same type of locking structure, on the other side makes the areas of the recesses and the projections of the present rigid surface covering plastic material be smaller than the ordinary PVC sheet in order to achieve the same locking force when they have the same type of locking structure. That is to say, the present rigid surface covering plastic material could decrease the areas of the locking structure and decreases the cost of the floor tile.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A rigid surface covering plastic material, comprising:
a base layer (14) which comprising: 100 parts by weight of PVC resin, 10∼60 parts by weight of solid plasticizer and 60-150 parts by weight of additive, **characterized by** the base layer (14) further comprises 0.1-10 parts by weight of liquid plasticizer, the solid plasticizer is at least one of a green polymer with a melting point of 50-150 °C and Ethylene Propylene Diene Monomer, the green polymer with a melting point of 50-150 °C is at least one of modified thermoplastic polyurethane, modified polyurethane modified Polypropylene and modified vinyl polymer, and the base layer (14) comprises a middle layer (15) and a bottom layer (17), the middle layer (15) comprises 100 parts by weight of PVC resin, 10-60 parts by weight of solid plasticizer and 125-400 parts by weight of additive, the bottom layer (17) comprises 100 parts by weight of PVC resin, 10-60 parts by weight of solid plasticizer and 60-350 parts by weight of additive.

2. The rigid surface covering plastic material according to claim 1, wherein the base layer (14) comprises 30-60 parts by weight of the solid plasticizer.

3. The rigid surface covering plastic material according to claim 1, wherein the base layer (14) comprises 150-350 parts by weight of the additives.

4. The rigid surface covering plastic material according to claim 1 or 3, wherein the base layer (14) comprises 225-300 parts by weight of the additives.

5. The rigid surface covering plastic material according to claim 1,wherein the liquid plasticizer is selected from a group consisting of phthalate acid esters plasticizers, fatty acid ester plasticizers, aliphatic dibasic acid ester plasticizers, phosphate ester plasticizers, epoxy compound plasticizers, chlorine-containing plasticizers and trimellitate plasticizers.

6. The rigid surface covering plastic material according to claim 1 or 5, wherein the liquid plasticizer is dioctyl terephthalate.

7. The rigid surface covering plastic material according to claim 1, wherein the rigid surface covering plastic material further comprises at least a glass fiber layer (16), which is disposed between the middle layer (15) and the bottom layer (17).

8. The rigid surface covering plastic material according to claim 1, wherein the middle layer (15) has multilayer structure, the rigid surface covering plastic material further comprises at least a glass fiber layer, which is disposed between adjacent layers of the middle layer.

9. The rigid surface covering plastic material according to claim 1,wherein the rigid surface covering plastic material further comprises a decoration layer (13) disposed on the base layer (14) and a surface protection layer (12) disposed on the decoration layer (13), the surface protection layer (12) is a hard PVC transparent film or a hard transparent polyester film, a hardness of the surface protection layer (12) is 50-85 HD, a thickness of the surface protection layer (12) is 0.05-1.5 mm 0.05.

10. The rigid surface covering plastic material according to claim 9, further comprising a UV coating layer (11) formed on the surface protection layer (12).

11. The rigid surface covering plastic material according to claim 1, further comprising a plurality of locking structures formed on the surface covering plastic material.

12. The rigid surface covering plastic material according to claim 11, wherein each one of the locking structures includes recesses (18) formed at one side of the rigid surface covering plastic material, and projections (19) formed at the other side of the rigid surface covering plastic material opposite to the recesses (18), wherein the recesses (18) and the projections (19) are clasped together to snap two adjacent ones of the rigid surface covering plastic materials together.

13. The rigid surface covering plastic material according to claim 1, wherein the additives is a mixture of calcium carbonate powder and other additives, the other additives is selected from a group consisting of stabilizers, flame retardants, smoke suppressants, and antioxidants.

## Patentansprüche

1. Starres Oberflächenabdeckungskunststoffmaterial, umfassend
eine Basisschicht (14), die 100 Gewichtsteile von PVC-Harz, 10∼60 Gewichtsteile von festem Weichmacher und 60-150 Gewichteile vom Zusatzmittel umfasst, **gekennzeichnet dadurch, dass** die Basisschicht (14) darüber hinaus 0,1-10 Gewichtsteile von flüssigem Weichmacher umfasst, der feste Weichmacher mindestens einer von einem grünem Polymer, dessen Schmelzpunkt 50-150°C beträgt, und einem Ethylen-Propylen-Dien-Monomer ist, der grüne Polymer, dessen Schmelzpunkt 50-150°C beträgt, mindestens einer von modifiziertem thermoplastischem Polyurethan, modifiziertem Polyurethan, modifiziertem Polypropylen und modifiziertem Vinylpolymer ist, und die Basisschicht (14) eine Mittelschicht (15) und eine Unterschicht (17) umfasst, die Mittelschicht (15) 100 Gewichtsteile von PVC-Harz, 10-60 Gewichtsteile von festem Weichmacher und 125-400 Gewichtsteile vom Zusatzmittel umfasst, die Unterschicht (17) 100 Gewichtsteile von PVC-Harz, 10-60 Gewichtsteile von festem Weichmacher und 60-350 Gewichtsteile vom Zusatzmittel umfasst.

2. Starres Oberflächenabdeckungskunststoffmaterial **gemäß Anspruch 1,** wobei die Basisschicht (14) 30-60 Gewichtsteile von festem Weichmacher umfasst.

3. Starres Oberflächenabdeckungskunststoffmaterial **gemäß Anspruch 1,** wobei die Basisschicht (14) 150-350 Gewichtsteile von Zusatzmitteln umfasst.

4. Starres Oberflächenabdeckungskunststoffmaterial **gemäß Anspruch 1 oder 3,** wobei die Basisschicht (14) 225-300 Gewichtsteile von Zusatzmitteln umfasst.

5. Starres Oberflächenabdeckungskunststoffmaterial **gemäß Anspruch 1,** wobei der flüssige Weichmacher aus einer Gruppe ausgewählt ist, die aus Phthalatsäureester-Weichmachern, Fettsäureester-Weichmachern, aliphatischen zweibasigen Ester-Weichmachern, Phosphatester-Weichmachern, Epoxid-Verbund-Weichmachern, chlorhaltigen Weichmachern und Trimellit-Weichmachern besteht.

6. Starres Oberflächenabdeckungskunststoffmaterial **gemäß Anspruch 1 oder 5**, wobei der flüssige Weichmacher Dioctylterephthalat ist.

7. Starres Oberflächenabdeckungskunststoffmaterial **gemäß Anspruch 1,** wobei das starre Oberflächenabdeckungskunststoffmaterial darüber hinaus mindestens eine Glasfaser-Schicht (16) umfasst, welche zwischen der Mittelschicht (15) und Unterschicht (17) angeordnet ist.

8. Starres Oberflächenabdeckungskunststoffmaterial **gemäß Anspruch 1,** wobei die Mittelschicht (15) eine vielschichtige Struktur hat, das starre Oberflächenabdeckungskunststoffmaterial darüber hinaus mindestens eine Glasfaser-Schicht umfasst, die zwischen den anliegenden Schichten der Mittelschicht angeordnet ist.

9. Starres Oberflächenabdeckungskunststoffmaterial **gemäß Anspruch 1,** wobei das starre Oberflächenabdeckungskunststoffmaterial darüber hinaus eine dekorative Schicht (13) umfasst, die auf der Basisschicht (14) angeordnet ist, und eine Oberflächenschutzschicht (12), die auf der dekorativen Schicht (13) angeordnet ist, die Oberflächenschutzschicht (12) ein harter transparenter PVC-Film oder ein harter transparenter Polyesterfilm ist, die Härte der Oberflächenschutzschicht (12) 50-85 HD beträgt, die Dicke der Oberflächenschutzschicht (12) 0,05-1,5 mm beträgt.

10. Starres Oberflächenabdeckungskunststoffmaterial **gemäß Anspruch 9,** welches darüber hinaus eine UV-Beschichtung (11) umfasst, die auf der Oberflächenschutzschicht (12) gebildet ist.

11. Starres Oberflächenabdeckungskunststoffmaterial **gemäß Anspruch 1,** welches darüber hinaus eine Mehrzahl von fixierenden Strukturen umfasst, die auf dem Oberflächenabdeckungskunststoffmaterial gebildet sind.

12. Starres Oberflächenabdeckungskunststoffmaterial **gemäß Anspruch** 11, wobei jede von der fixierenden Strukturen Aussparungen (18) hat, die auf einer Seite des starren Oberflächenabdeckungskunststoffmaterials gebildet sind, und Vorsprünge (19), die auf der anderen Seite des starren Oberflächenabdeckungskunststoffmaterials gegenüber den Aussparungen (18) gebildet sind, wobei die Aussparungen (18) und die Vorsprünge (19) zusammengeklappt sind, um zwei anliegende, starre Oberflächenabdeckungskunststoffmaterialien zusammen einzurasten.

13. Starres Oberflächenabdeckungskunststoffmaterial **gemäß Anspruch 1,** wobei die Zusatzmittel eine Mischung von Kalziumkarbonat-Pulver und anderen Zusatzmitteln sind, die anderen Zusatzmittel aus einer Gruppe ausgewählt sind, die aus Stabilisatoren, Flammenhemmern, Rauchunterdrückungsmitteln und Antioxidantien besteht.

## Revendications

1. Surface rigide de revêtement de matière plastique comprenant:
une couche de base (14) qui comprend : 100 parties en poids de résine PVC, 10∼60 parties en poids d'un plastifiant solide et 60-150 partie en poids d'additif, **caractérisé en ce que** la couche de base (14) comprend en outre 0,1 - 10 parties en poids d'un plastifiant liquide, le plastifiant solide est au moins un polymère vert ayant un point de fusion 50 - 150°C et monomère d'éthylène propylène diène, le polymère vert ayant un point de fusion 50 - 150°C est au moins un polyuréthane thermoplastique modifié, un polyuréthane modifié, un polypropylène modifié et un polymère vinylique modifié, et la couche de base (14) comprend une couche intermédiaire (15) et une couche inférieure (17), la couche intermédiaire (15) comprend 100 parties en poids de résine PVC, entre 10 et 60 parties en poids d'un plastifiant solide et entre 125 et 400 parties en poids d'additif, la couche inférieure (17) comprend 100 parties en poids de résine PVC, 10 - 60 parties en poids d'un plastifiant solide et 60 - 350 parties en poids d'additif.

2. Surface rigide de revêtement de matière plastique selon la revendication 1, où la couche de base (14) comprend en 30 - 60 parties en poids d'un plastifiant solide.

3. Surface rigide de revêtement de matière plastique selon la revendication 1, où la couche de base (14) comprend 150 - 350 parties en poids d'additifs.

4. Surface rigide de revêtement de matière plastique selon la revendication 1 ou 3, où la couche de base (14) comprend 225 - 300 parties en poids d'additifs.

5. Surface rigide de revêtement de matière plastique selon la revendication 1, où le plastifiant liquide est choisi dans un groupe se constituant des plastifiants à base d'esters d'acide phtalique, des plastifiants à base d'ester d'acide gras, des plastifiants à base d'ester d'acide dibasique aliphatique, des plastifiants à base d'ester de phosphate, des plastifiants à base de composé époxy, des plastifiants contenant du chlore et des plastifiants au trimellitate.

6. Surface rigide de revêtement de matière plastique selon la revendication 1 ou 5, où le plastifiant liquide est le téréphtalate de dioctyle.

7. Surface rigide de revêtement de matière plastique selon la revendication 1, où la surface rigide de revêtement de matière plastique comprend en outre au moins une couche de fibres de verre (16) qui est disposée entre la couche intermédiaire (15) et la couche inférieure (17).

8. Surface rigide de revêtement de matière plastique selon la revendication 1, où la couche intermédiaire (15) a une structure multicouche, la matériau plastique de revêtement de surface rigide comprend en outre au moins une couche de fibres de verre qui est disposée entre les couchas adjacentes de la couche intermédiaire.

9. Surface rigide de revêtement de matière plastique selon la revendication 1, où la surface rigide de revêtement de matière plastique comprend en outre une couche de décoration (13) disposée sur la couche de base (14) et une couche de protection de surface (12) disposée sur la couche de décoration (13), la couche de protection de surface (12) est un film transparent en PVC dur ou un film de polyester transparent dur, la dureté de la couche de protection de surface (12) est 50 - 85 HD, l'épaisseur de la couche de protection de surface (12) est 0,05 - 1,5 mm.

10. Surface rigide de revêtement de matière plastique selon la revendication 9, comprenant en outre un couche de revêtement UV (11) formée sur la couche de protection de surface (12).

11. Surface rigide de revêtement de matière plastique selon la revendication 1, comprenant en outre une pluralité de structures de verrouillage formées sur le matériau plastique de revêtement de surface.

12. Surface rigide de revêtement de matière plastique selon la revendication 11, où chacune des structures de verrouillage comprend des cavités (18) formées sur un côté du matériau plastique de revêtement de surface rigide, et des saillies (19) formées de l'autre côté du matériau plastique de revêtement de surface rigide en regard des cavités (18), dans lequel les cavités (18) et les saillies (19) sont agrafés l'une à l'autre pour enclencher ensemble deux éléments adjacentes de la surface rigide de revêtement de matière plastique.

13. Surface rigide de revêtement de matière plastique selon la revendication 1, où les additifs sont un mélange de poudre de carbonate de calcium et d'autres additifs, les autres additifs sont choisis dans un groupe se constituant des stabilisants, des retardateurs de flamme, des suppresseurs de fumée et d'antioxydants.
